# EUROPÄISCHE PATENTSCHRIFT

(11) **EP 1 133 834 B1**
(45) Veröffentlichungstag und Bekanntmachung des Hinweises auf die Patenterteilung: **17.08.2005**
(21) Anmeldenummer: 99960827.6
(22) Anmeldetag: 27.10.1999
(51) Int. Cl.: H04B 1/707

(54) **VERFAHREN ZUM STEUERN VON SPEICHERZUGRIFFEN BEI "RAKE"-EMPFÄNGERN MIT "EARLY-LATE TRACKING" IN TELEKOMMUNIKATIONSSYSTEMEN**
METHOD FOR CONTROLLING MEMORY ACCESS IN RAKE RECEIVERS WITH EARLY-LATE TRACKING IN TELECOMMUNICATIONS SYSTEMS
PROCEDE DE REGULATION D'ACCES MEMOIRE DANS DES RECEPTEURS RAKE A SUIVI ANTICIPE-DIFFERE DANS DES SYSTEMES DE TELECOMMUNICATIONS

(30) Priorität: 27.10.1998 DE 19849532
(43) Veröffentlichungstag der Anmeldung: 19.09.2001
(73) Patentinhaber: SIEMENS AKTIENGESELLSCHAFT, 80333 München (DE)
(72) Erfinder: FALKENBERG, Andreas, D-58093 Hagen (DE); BRAAM, Reinhold, D-46414 Rhede (DE); NIEMEYER, Ulf, D-44803 Bochum (DE); ROHE, Christoph, D-44793 Bochum (DE); SKUK, Oskar, A-1180 Wien (AT)
(86) Internationale Anmeldenummer: PCT/DE1999/003430
(87) Internationale Veröffentlichungsnummer: WO 2000/025435

(56) Entgegenhaltungen:
- WO-A-97/28608
- GB-A- 2 300 545
- US-A- 5 659 573
- US-A- 5 799 010
- DE GAUDENZI R ET AL: "CHIP TIMING SYNCHRONIZATION IN AN ALL-DIGITAL BAND-LIMITED DS/SS MODEM" PROCEEDINGS OF THE INTERNATIONAL CONFERENCE ON COMMUNICATIONS,US,NEW YORK, IEEE, 1991, Seiten 1688-1692, XP000277600 ISBN: 0-7803-0006-8

## Beschreibung

Verfahren zum Steuern von Speicherzugriffen bei "RAKE"-Empfängern mit "Early-Late Tracking" in Telekommunikationssystemen mit drahtloser Telekommunikation zwischen mobilen und/oder stationären Sende-/Empfangsgeräten, insbesondere in Mobilfunksystemen der dritten Generation

Telekommunikationssysteme mit drahtloser Telekommunikation zwischen mobilen und/oder stationären Sende-/Empfangsgeräten sind spezielle Nachrichtensysteme mit einer Nachrichtenübertragungsstrecke zwischen einer Nachrichtenquelle und einer Nachrichtensenke, bei denen beispielsweise Basisstationen und Mobilteile zur Nachrichtenverarbeitung und -übertragung als Sende- und Empfangsgeräte verwendet werden und bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung vorzugsweise digital ist,
3) die Nachrichtenübertragung über die Fernübertragungsstrecke drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (Code **D**ivision **M**ultiple **A**ccess) - z.B. nach Funkstandards wie DECT **[D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Oktober 1992* und der DECT-Publikation des *DECT-Forum, Februar 1997, Seiten 1 bis 16*], GSM [**G**roupe **S**péciale **M**obile oder **G**lobal **S**ystem for **M**obile Communication; vgl. *Informatik Spektrum 14 (1991) Juni, Nr. 3, Berlin, DE; A.Mann: "Der GSM-Standard - Grundlage für digitale europäische Mobilfunknetze", Seiten 137 bis 152* **in Verbindung mit** der Publikation *telekom praxis 4*/*1993, P. Smolka "GSM-Funkschnittstelle - Elemente und Funktionen",* Seiten *17 bis 24],*
   UMTS **[U**niversal **M**obile **T**elecommunication **S**ystem; vgl. **(1):** *Nachrichtentechnik Elektronik, Berlin 45, 1995, Heft 1, Seiten 10 bis 14 und Heft 2, Seiten 24 bis 27; P.Jung, B.Steiner: "Konzept eines CDMA-Mobilfunksystems mit gemeinsamer Detektion für die dritte Mobilfunkgeneration";* **(2):** Nach*richtentechnik Elektronik, Berlin 41, 1991, Heft 6, Seiten 223 bis 227 und Seite 234; P. W. Baier, P. Jung, A.Klein: "CDMA - ein günstiges Vielfachzugriffsverfahren für frequenzselektive und zeitvariante Mobilfunkkanäle";* **(3):** *IEICE Transactions on Fundamentals of Electonics, Communications and Computer Sciences, Vol. E79-A, No. 12, December 1996, Seiten 1930 bis 1937; P.W.Baier, P. Jung: "CDMA Myths and Realities Revisited";* **(4):** *IEEE Personal Communications, February 1995, Seiten 38 bis* 47; *A. Urie, M.Streeton, C.Mourot:* "An Advanced *TDMA Mobile Access System for UMTS*"; ***(5):** telekom praxis, 5*/*1995, Sei ten 9 bis 14; P. W. Baier: "Spread-Spectrum-Technik und CDMA - eine ursprünglich militärische Technik erobert den zivilen Bereich";* **(6)**: *IEEE Personal Communications, February 1995, Seiten 48 bis 53; P.G.Andermo, L.M.Ewerbring: "An CDMA-Based Radio Access Design for UMTS";* **(7):** *ITG Fachberichte 124 (1993), Berlin, Offenbach: VDE Verlag ISBN 3-8007-1965-7, Seiten 67 bis 75; Dr. T. Zimmermann, Siemens AG: "Anwendung von CDMA in der Mobilkommunikation";* **(8):** *telcom report 16, (1993), Heft 1, Seiten 38 bis 41; Dr. T. Ketseoglou, Siemens AG und Dr. T.Zimmermann, Siemens AG: "Effizienter Teilnehmerzugriff für die 3. Generation der Mobilkommunikation - Vielfachzugriffsverfahren CDMA macht Luftschnittstelle flexibler";* **(9):** *Funkschau 6*/*98: R.Sietmann "Ringen um die UMTS-Schnittstelle", Seiten 76 bis 81*] WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"]
   erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Im UMTS-Szenario (3. Mobilfunkgeneration bzw. IMT-2000) gibt es z.B. gemäß der Druckschrift *Funkschau 6*/*98: R.Sietmann "Ringen um die UMTS-Schnittstelle", Seiten 76 bis 81* zwei Teilszenarien. In einem ersten Teilszenario wird der lizensierte koordinierte Mobilfunk auf einer WCDMA-Technologie (**W**ideband **C**ode **D**ivision **M**ultiple **A**ccess) basieren und, wie bei GSM, im FDD-Modus (**F**requency **D**ivision **D**uplex) betrieben, während in einem zweiten Teilszenario der unlizensierte unkoordinierte Mobilfunk auf einer TD-CDMA-Technologie (**T**ime **D**ivision-**C**ode **D**ivision **M**ultiple **A**ccess) basieren und, wie bei DECT, im TDD-Modus (**F**requency **D**ivision **D**uplex) betrieben wird.

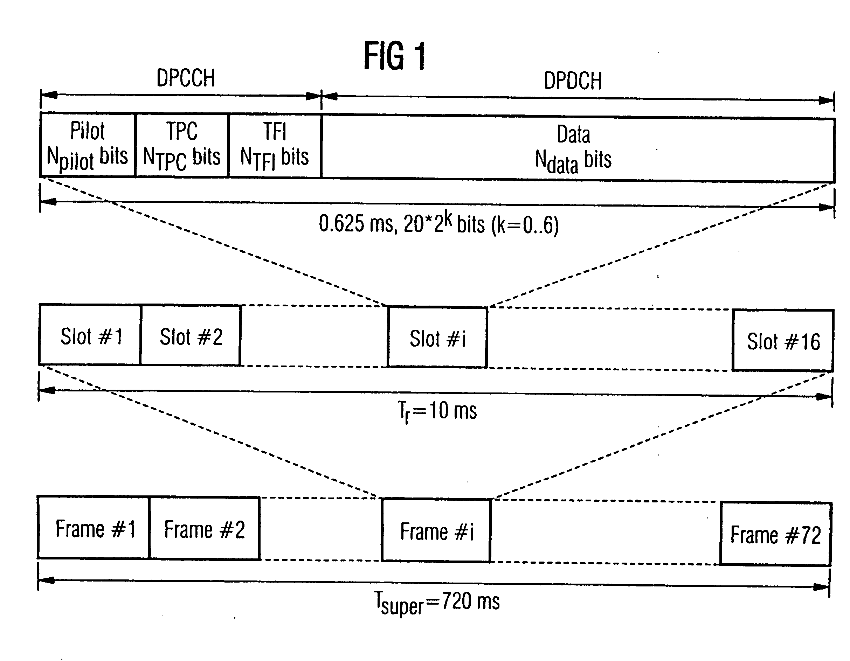

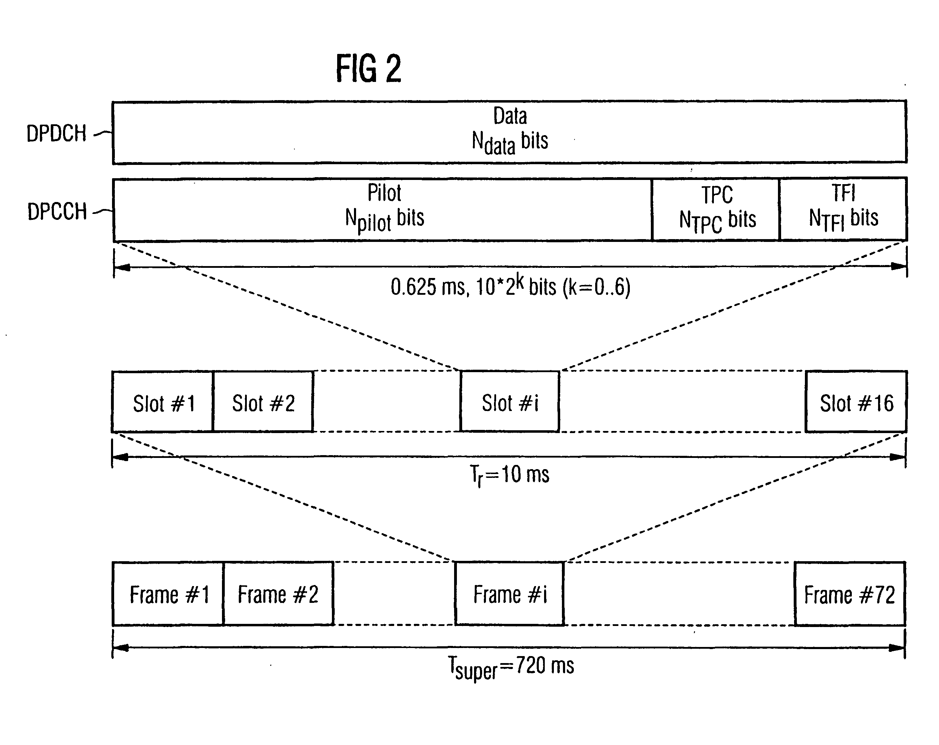

Für den WCDMA/FDD-Betrieb des Universal-Mobil-Telekommunikation-Systems enthält die Luftschnittstelle des Telekommunikationsystems in Auf- und Abwärtsrichtung der Telekommunikation gemäß der Druckschrift *ETSI STC SMG2 UMTS-L1, Tdoc SMG2 UMTS-L1 163*/*98: "UTRA Physical Layer Description FDD Parts" Vers. 0.3, 1998-05-29* jeweils mehrere physikalische Kanäle, von denen ein erster physikalischer Kanal, der sogenannte **D**edicated **P**hysical **C**ontrol **CH**annel DPCCH, und ein zweiter physikalischer Kanal, der sogenannte **D**edicated **P**hysical **D**ata **CH**annel DPDCH, in bezug auf deren Zeitrahmenstrukturen (frame structure) in den FIGUREN 1 und 2 dargestellt sind.

Im Downlink (Funkverbindung von der Basisstation zur Mobilstation) des WCDMA/FDD Systems von ETSI bzw. ARIB wird der Dedicated Physical Control Channel (DPCCH) und der Dedicated Physical Data Channel (DPDCH) zeitlich gemultiplext, während im Uplink ein I/Q-Multiplex stattfindet, bei dem der DPDCH im I-Kanal und der DPCCH im Q-Kanal übertragen werden.

Der DPCCH enthält Nₚᵢₗₒₜ Pilot-Bits zur Kanalschätzung, N_{TPC} Bits für eine schnelle Leistungsregelung und N_{TFI} Format-Bits, die die Bitrate, Art des Services, Art der Fehlerschutzcodierung, etc. anzeigen (TFI = Traffic Format Indicator).

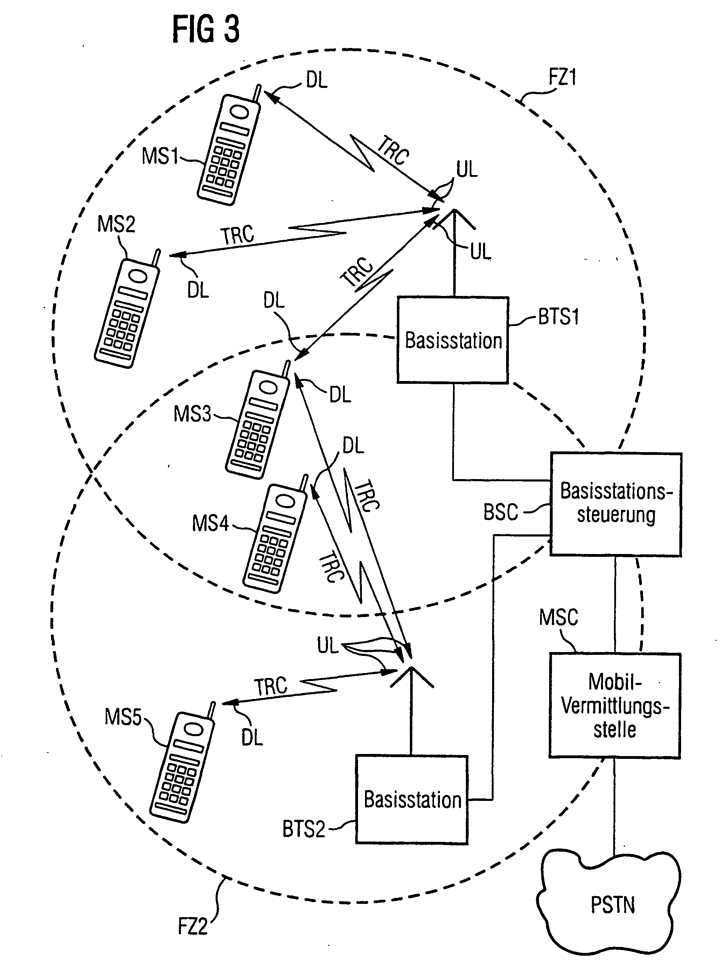

FIGUR 3 zeigt auf der Basis eines GSM-Funkszenarios mit z.B. zwei Funkzellen und darin angeordneten Basisstationen (**B**ase **T**ransceiver **S**tation), wobei eine erste Basisstation BTS1 (Sender/Empfänger) eine erste Funkzelle FZ1 und eine zweite Basisstation BTS2 (Sende-/Empfangsgerät) eine zweite Funkzelle FZ2 omnidirektional "ausleuchtet", ein FDMA/TDMA/CDMA-Funkszenario, bei dem die Basisstationen BTS1, BTS2 über eine für das FDMA/TDMA/CDMA-Funkszenario ausgelegte Luftschnittstelle mit mehreren in den Funkzellen FZ1, FZ2 befindlichen Mobilstationen MS1...MS5 (Sende-/Empfangsgerät) durch drahtlose uni- oder bidirektionale - Aufwärtsrichtung UL (Up Link) und/oder Abwärtsrichtung DL (Down Link) - Telekommunikation auf entsprechende Übertragungkanäle TRC (Transmission Channel) verbunden bzw. verbindbar sind. Die Basisstationen BTS1, BTS2 sind in bekannter Weise (vgl. GSM-Telekommunikationssystem) mit einer Basisstationssteuerung BSC (**B**ase**S**tation Controller) verbunden, die im Rahmen der Steuerung der Basisstationen die Frequenzverwaltung und Vermittlungsfunktionen übernimmt. Die Basisstationssteuerung BSC ist ihrerseits über eine Mobil-Vermittlungsstelle MSC (**M**obile **S**witching **C**enter) mit dem übergeordneten Telekommunikationsnetz, z.B. dem PSTN (Public Switched Telecommunication Network), verbunden. Die Mobil-Vermittlungsstelle MSC ist die Verwaltungszentrale für das dargestellte Telekommunikationssystem. Sie übernimmt die komplette Anrufverwaltung und mit angegliederten Registern (nicht dargestellt) die Authentisierung der Telekommunikationsteilnehmer sowie die Ortsüberwachung im Netzwerk.

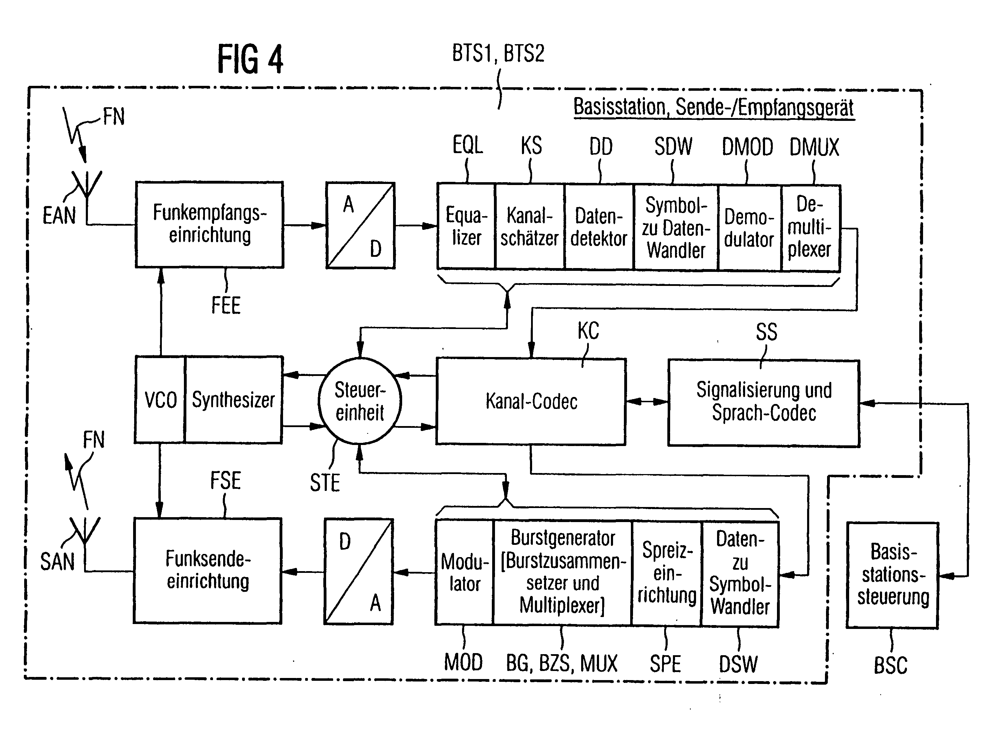

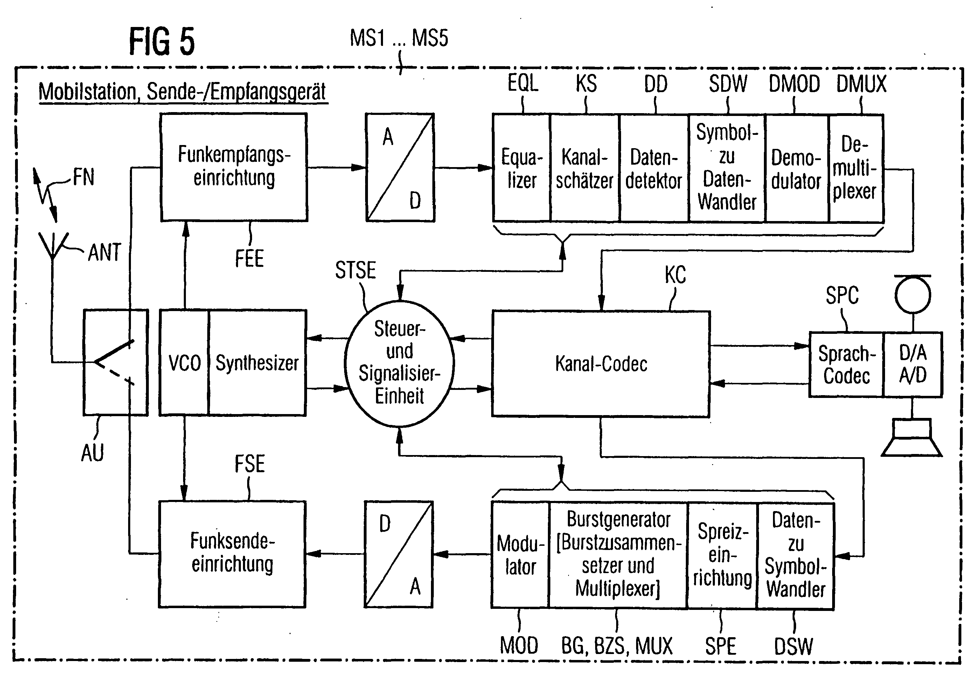

FIGUR 4 zeigt den prinzipiellen Aufbau der als Sende-/Empfangsgerät ausgebildeten Basisstation BTS1, BTS2, während FIGUR 5 den prinzipiellen Aufbau der ebenfalls als Sende-/Empfangsgerät ausgebildeten Mobilstation MT1...MT5 zeigt. Die Basisstation BTS1, BTS2 übernimmt das Senden und Empfangen von Funknachrichten von und zur Mobilstation MTS1..MTS5, während die Mobilstation MT1...MT5 das Senden und Empfangen von Funknachrichten von und zur Basisstation BTS1, BTS2 übernimmt. Hierzu weist die Basisstation eine Sendeantenne SAN und eine Empfangsantenne EAN auf, während die Mobilstation MT1...MT5 eine durch eine Antennenumschaltung AU steuerbare für das Senden und Empfangen gemeinsame Antenne ANT aufweist. In der Aufwärtsrichtung (Empfangspfad) empfängt die Basisstation BTS1, BTS2 über die Empfangsantenne EAN beispielsweise mindestens eine Funknachricht FN mit einer FDMA/TDMA/CDMA-Komponente von mindestens einer der Mobilstationen MT1...MT5, während die Mobilstation MT1...MT5 in der Abwärtsrichtung (Empfangspfad) über die gemeinsame Antenne ANT beispielsweise mindestens eine Funknachricht FN mit einer FDMA/TDMA/CDMA-Komponente von mindestens einer Basisstation BTS1, BTS2 empfängt. Die Funknachricht FN besteht dabei aus einem breitbandig gespreizten Trägersignal mit einer aufmodulierten aus Datensymbolen zusammengesetzten Information.

In einer Funkempfangseinrichtung FEE (Empfänger) wird das empfangene Trägersignal gefiltert und auf eine Zwischenfrequenz heruntergemischt, die ihrerseits im weiteren abgetastet und quantisiert wird. Nach einer Analog/Digital-Wandlung wird das Signal, das auf dem Funkweg durch Mehrwegeausbreitung verzerrt worden ist, einem Equalizer EQL zugeführt, der die Verzerrungen zu einem großen Teil ausgleicht (Stw.: Synchronisation).

Anschließend wird in einem Kanalschätzer KS versucht die Übertragungseigenschaften des Übertragungskanals TRC auf dem die Funknachricht FN übertragen worden ist, zu schätzen. Die Übertragungseigenschaften des Kanals sind dabei im Zeitbereich durch die Kanalimpulsantwort angegeben. Damit die kanalimpulsantwort geschätzt werden kann, wird der Funknachricht FN sendeseitig (im vorliegenden Fall von der Mobilstation MT1...MT5 bzw. der Basisstation BTS1, BTS2) eine spezielle, als Trainingsinformationssequenz ausgebildete Zusatzinformation in Form einer sogenannten Mitambel zugewiesen bzw. zugeordnet.

In einem daran anschließenden für alle empfangenen Signale gemeinsamen Datendetektor DD werden die in dem gemeinsamen Signal enthaltenen einzelenen mobilstationsspezifischen Signalanteile in bekannter Weise entzerrt und separiert. Nach der Entzerrung und Separierung werden in einem Symbol-zu-Daten-Wandler SDW die bisher vorliegenden Datensymbole in binäre Daten umgewandelt. Danach wird in einem Demodulator DMOD aus der Zwischenfrequenz der ursprüngliche Bitstrom gewonnen, bevor in einem Demultiplexer DMUX die einzelnen Zeitschlitze den richtigen logischen Kanälen und damit auch den unterschiedlichen Mobilstationen zugeordnet werden.

In einem Kanal-Codec KC wird die erhaltene Bitsequenz kanalweise decodiert. Je nach Kanal werden die Bitinformationen dem Kontroll- und Signalisierungszeitschlitz oder einem Sprachzeitschlitz zugewiesen und - im Fall der Basisstation (FIGUR 4) - die Kontroll- und Signalisierungsdaten und die Sprachdaten zur Übertragung an die Basisstationssteuerung BSC gemeinsam einer für die Signalisierung und Sprachcodierung/decodierung (Sprach-Codec) zuständigen Schnittstelle SS übergeben, während - im Fall der Mobilstation (FIGUR 5) - die Kontroll- und Signalisierungsdaten einer für die komplette Signalisierung und Steuerung der Mobilstation zuständigen Steuer- und Signalisiereinheit STSE und die Sprachdaten einem für die Spracheingabe und -ausgabe ausgelegten Sprach-Codec SPC übergeben werden.

In dem Sprach-Codec der Schnittstelle SS in der Basisstation BTS1, BTS2 werden die Sprachdaten in einem vorgegebenen Datenstrom (z.B. 64kbit/s-Strom in Netzrichtung bzw. 13kbit/s-Strom aus Netzrichtung).

In einer Steuereinheit STE wird die komplette Steuerung der Basisstation BTS1, BTS2 durchgeführt.

In der Abwärtsrichtung (Sendepfad) sendet die Basisstation BTS1, BTS2 über die Sendeantenne SAN beispielsweise mindestens eine Funknachricht FN mit einer FDMA/TDMA/CDMA-Komponente an mindestens eine der Mobilstationen MT1...MT5, während die Mobilstation MT1...MT5 in der Aufwärtsrichtung (Sendepfad) über die gemeinsame Antenne ANT beispielsweise mindestens eine Funknachricht FN mit einer FDMA/TDMA/CDMA-Komponente an mindestens einer Basisstation BTS1, BTS2 sendet.

Der Sendepfad beginnt bei der Basisstation BTS1, BTS2 in FIGUR 4 damit, daß in dem Kanal-Codec KC von der Basisstationssteuerung BSC über die Schnittstelle SS erhaltene Kontroll- und Signalisierungsdaten sowie Sprachdaten einem Kontroll- und Signalisierungszeitschlitz oder einem Sprachzeitschlitz zugewiesen werden und diese kanalweise in eine Bitsequenz codiert werden.

Der Sendepfad beginnt bei der Mobilstation MT1...MT5 in FIGUR 5 damit, daß in dem Kanal-Codec KC von dem Sprach-Codec SPC erhaltene Sprachdaten und von der Steuer- und Signalsiereinheit STSE erhaltene Kontroll- und Signalisierungsdaten einem Kontroll- und Signalisierungszeitschlitz oder einem Sprachzeitschlitz zugewiesen werden und diese kanalweise in eine Bitsequenz codiert werden.

Die in der Basisstation BTS1, BTS2 und in der Mobilstation MT1...MT5 gewonnene Bitsequenz wird jeweils in einem Datenzu-Symbol-Wandler DSW in Datensymbole umgewandelt. Im Anschluß daran werden jeweils die Datensymbole in einer Spreizeinrichtung SPE mit einem jeweils teilnehmerindividuellen Code gespreizt. In dem Burstgenerator BG, bestehend aus einem Burstzusammensetzer BZS und einem Multiplexer MUX, wird danach in dem Burstzusammensetzer BZS jeweils den gespreizten Datensymbolen eine Trainingsinformationssequenz in Form einer Mitambel zur Kanalschätzung hinzugefügt und im Multiplexer MUX die auf diese Weise erhaltene Burstinformation auf den jeweils richtigen Zeitschlitz gesetzt. Abschließend wird der erhaltene Burst jeweils in einem Modulator MOD hochfrequent moduliert sowie digital/analog umgewandelt, bevor das auf diese Weise erhaltene Signal als Funknachricht FN über eine Funksendeeinrichtung FSE (Sender) an der Sendeantenne SAN bzw. der gemeinsamen Antenne ANT abgestrahlt wird.

Das Problem des Vielfachempfangs, des sogenannten "delay spreads", bei Vorhandensein von Echos kann bei CDMA-basierten Systemen trotz der großen Breitbandigkeit und der sehr kleinen Chip- bzw. Bitzeiten dieser Systeme gelöst werden, indem die empfangenen Signale zur Erhöhung der Detektionssicherheit miteinander kombiniert werden. Hierzu müssen natürlich die Kanaleigenschaften bekannt sein. Zu deren Bestimmung dient eine allen Teilnehmern gemeinsame Pilotsequenz (vgl.: FIGUREN 1 und 2), die zusätzlich ohne Modulation durch eine Nachrichtensequenz eigenständig und mit erhöhter Sendeleistung ausgestrahlt wird. Der Empfänger gewinnt aus ihrem Empfang die Information, wie viele Pfade an der augenblicklichen Empfangssituation beteiligt sind und welche Verzögerungszeiten dabei entstehen.

In einem "RAKE"-Empfänger werden die über die einzelnen Pfade einlaufenden Signale in getrennten Empfängern, den "Fingern" des "RAKE"-Empfängers erfaßt, detektiert und in einem Additionsglied nach dem Ausgleich der Verzögerungszeiten und den Phasenverschiebungen der Echos, untereinander gewichtet, aufsummiert.

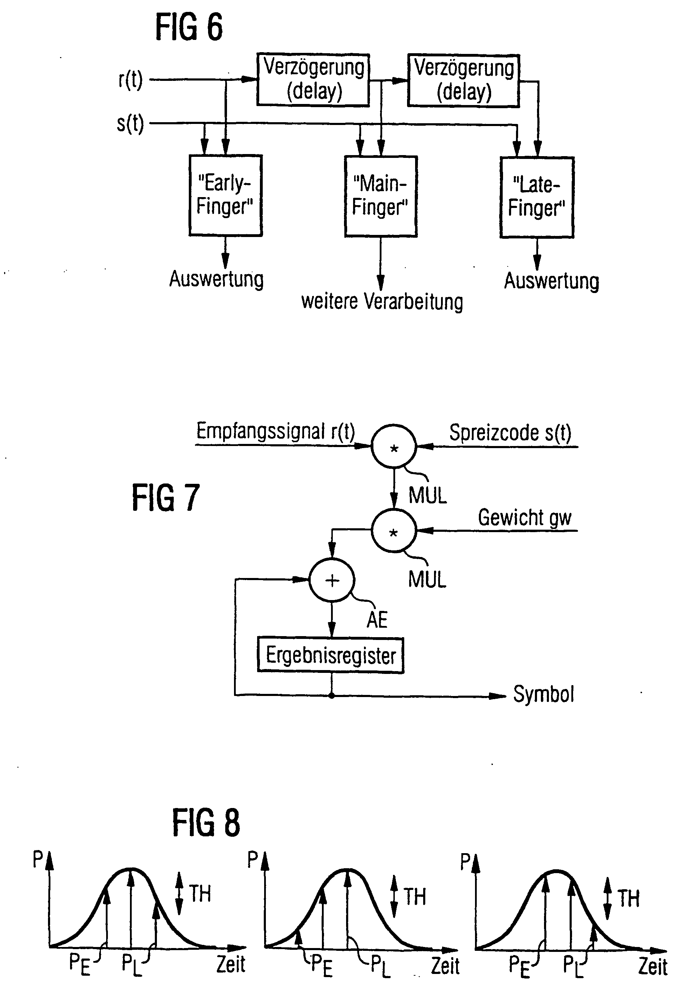

Die "Finger" des "RAKE"-Empfängers können mit Hilfe eines "Early- und Late-Tracking"-Verfahrens (vgl.: J.G. Proakis: "Digital Communications"; McGraw-Hill, Inc; 3^{rd} Edition, 1995; Kap. 6.3) ohne eine erneute, zeit- und ressourcenintensive Kanalschätzung durchführen zu müssen, gemäß der Veränderung des Übertragungskanals nachgeführt werden. Dazu werden jedem "RAKE-Finger" gemäß FIGUR 6 jeweils zwei zusätzliche "Finger" hinzugefügt. Die beiden "Finger" detektieren das Empfangssignal r(t) mit dem gleichen Spreizcode s(t) wie der "Main-Finger", der einzige Unterschied zum "Main-Finger" ist, daß das Empfangssignal beim "Early-Finger" um eine Position vorgezogen und beim "Late-Finger" um eine Sample-Position verzögert (delay) wird. Dieses Verfahren ist im besonderen bei Überabtastung (Oversampling) zu verwenden. Die vom "Early- und Late-Finger" eingesammelten Energien werden verglichen. Die Fingerposition des "Main-Finger" wird nach diesem Vergleich in die Richtung des stärkeren "Fingers" verschoben. Dies wird erst dann durchgeführt, wenn ein bestimmter Schwellwert beim Energieunterschied überschritten ist. Der "RAKE"-Empfänger ist in der angegebenen Literatur (vgl.: J.G. Proakis: "Digital Communications"; McGraw-Hill, Inc; 3^{rd} Edition, 1995; Kap. 14.5) genauer beschrieben.

Ein solches Verfahren zum "Early-und Late-Tracking" ist ebenfalls in der US-A-5,659,573 beschrieben.

Aus der FIGUR 6 wird ersichtlich, daß der "Early-Finger" den Entspreizvorgang für das Empfangssignal um eine Verzögerungseinheit früher durchführt als der eigentliche "Main-Finger". Der "Late-Finger" führt den Entspreizvorgang genau eine Verzögerungseinheit später als der "Main-Finger" durch.

In FIGUR 7 ist der Aufbau eines "Fingers" dargestellt. Er besteht im wesentlichen aus zwei Multiplizierern MUL und einer Akkumulationseinheit AE. Jeder abgetastete Empfangswert r(t) wird mit dem Spreizcode s(t) multipliziert und gemäß einer Kanalschätzung mit dem Gewicht gw gewichtet, welches für jeden Finger eines "RAKE"-Empfängers unterschiedlich ist.

Nun werden die so berechneten Werte gemäß dem Spreizfaktor aufaddiert. Das Ergebnis jedes "Fingers" ist ein komplexes Signal, welches ein entspreiztes Symbol darstellt. Bei den "Early- und Late-Fingern" kann die Multiplikation mit dem Gewicht entfallen, d.h. das Gewicht ist 1. Alle in den FIGUREN 6 und 7 dargestellten Signale sind komplex und bestehen somit aus einem Real- und einem Imaginärteil.

Die Auswertung der Ergebnisse, die der "Early- und der Late-Finger" liefern, geschieht durch die Bildung des Betrages und einen darauffolgenden Vergleich der Beträge. Falls die Beträge signifikant unterschiedlich sind, daß heißt eine Mindestdifferenz haben, welche durch einen Wert TH festgelegt ist, wird die Position der "Finger" so verändert, daß sich der "Main-Finger" nach der Veränderung auf der Position mit der größeren Energie befindet.

In FIGUR 8 wird dies verdeutlicht. Die Energie, die der "Early-Finger" berechnet, hier mit P_{E} bezeichnet, wird der Energie P_{L}, die durch den "Late-Finger" berechnet wird, gegenüber gestellt. Dies geschieht einfach anhand einer Auswertung der Energiedifferenz der beiden "Finger". Im ersten Fall werden die "Finger" nicht verschoben, da die Differenz zwischen "Early- und Late-Energie" nicht besonders groß ist, also im wesentlichen kleiner als der zu definierende Schwellwert TH. Im zweiten Fall ist die Differenz zwischen "Early-und Late- Finger" größer als TH und die Energie des "Late-Fingers" ist größer als die Energie des "Early-Fingers". Daraus folgt, daß der "Main-Finger" um eine Verzögerungsstufe nach hinten verschoben wird. Im dritten Fall ist die Differenz zwischen "Early- und Late-Finger" ebenfalls größer als TH und diesmal ist die Energie des "Early-Fingers" größer als die Energie des "Late-Fingers". Daraus folgt, daß der "Main-Finger" um eine Verzögerungsstufe nach vorne verschoben wird.

Bei der Nutzung von Early- und Late-Fingern in RAKE-Empfängern kann es zu dem im folgenden beschriebenen Problem kommen:

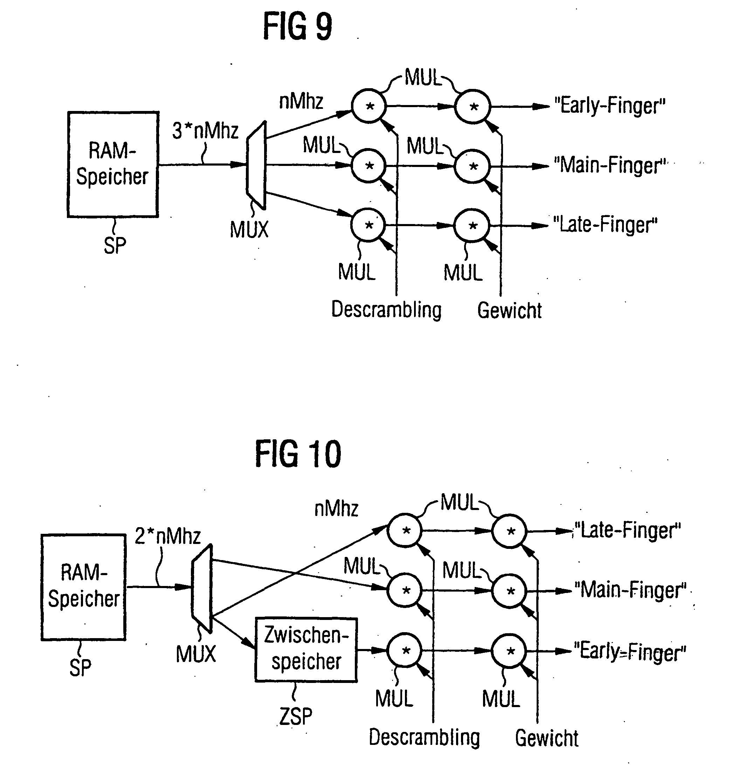

Werden gemäß FIGUR 9 die empfangenen Daten in einem RAM-Speicher SP zwischengespeichert um dann, durch entsprechende Speicherzugriffe über einen Multiplexer MUX, an den "RAKE"-Empfänger weitergereicht zu werden, so müssen pro "RAKE-Finger" drei Speicherzugriffe durchgeführt werden. Jeweils ein Zugriff wird für den "Haupt-, den Early-, und den Late-finger" benötigt. Werden die Daten beispielsweise mit einer 4 Mhz Abtastfrequenz in den Speicher geschrieben, so muß dieser bei acht "RAKE-Fingern" mit 96 Mhz lesbar sein. Dieses Verhältnis ändert sich bei Oversampling, da dann die Daten mit einer entsprechend der Oversampling-Rate höheren Geschwindigkeit in den Speicher geschrieben werden.

FIGUR 9 zeigt eine herkömmliche Schaltung. Die drei "RAKE-Finger" greifen unabhängig voneinander über den Multiplexer MUX auf den RAM-Speicher SP zu. In dem "RAKE-Empfänger" werden in bekannter Weise mit meherern Multiplizierern MUL die Verwürfelung (scrambling) rückgängig gemacht (descrambling) und eine Pfadgewichtung durchgeführt.

Die der Erfindung zugrundeliegende Aufgabe besteht darin, ein Verfahren zum Steuern von Speicherzugriffen bei "RAKE"-Empfängern mit "Early-Late Tracking" in Telekommunikationssystemen mit drahtloser Telekommunikation zwischen mobilen und/oder stationären Sende-/Empfangsgeräten, insbesondere in Mobilfunksystemen der dritten Generation, anzugeben, bei dem gegenüber den bisherigen bekannten Verfahren die Anzahl der Speicherzugriffe reduziert wird.

Diese Aufgabe wird gemäß dem Patentanspruch dadurch gelöst, daß in dem "RAKE"-Empfänger empfangene Daten, welche beim "Early-Late-Tracking" von einem "Late-Finger" gelesen werden, zwischengespeichert und einen Lesezyklus später zum Lesen durch einen "Early-Finger" beim "Early-Late-Tracking" an diesen weitergereicht werden.

Die der Erfindung zugrundeliegende Idee besteht darin, daß eine Eigenschaft ausgenutzt wird, die durch das Verhältnis der "Early- und Late-Daten" zueinander entsteht. Die Daten, welche von einem "Late-Finger" gelesen werden, werden einen Lesezyklus später von dem entsprechenden "Early-Finger" gelesen. Somit reicht es die vom "Late-Finger" gelesenen Daten in einem Speicher zwischenzuspeichern und entsprechend an den "Early-Finger" weiterzureichen, welcher dann selber nicht mehr auf den Speicher direkt zugreifen muß. Wird kein Oversampling genutzt, so können sogar alle drei Speicherzugriffe durch einen einzigen ersetzt werden. Wenn sich der "Early-und der Late-Finger" einen Speicherzugriff teilen, wird die Gesamtanzahl der Speicherzugriffe um 1/3 reduziert. Der Einsatz langsamerer und damit günstigerer Speicherbausteine ist dadurch möglich.

Ein Ausführungsbeispiel der Erfindung wird anhand der FIGUR 10 erläutert.

FIGUR 10 zeigt ausgehend von FIGUR 9 wie bei Speicherzugriffen in einem "RAKE"-Empfänger ein Speicherzugriff eingespart werden kann.

FIGUR 10 zeigt eine gegenüber FIGUR 9 modifizierte Schaltung. Zwei der drei "RAKE-Finger", der "Main-Finger" und der "Late-Finger" greifen wieder unabhängig voneinander über den Multiplexer MUX auf den RAM-Speicher SP zu. In dem "RAKE-Empfänger" werden wieder in bekannter Weise mit meherern Multiplizierern MUL die Verwürfelung (scrambling) rückgängig gemacht (descrambling) und eine Pfadgewichtung durchgeführt. Bei Zugriff des "Late-Finger" für das "Early-Late-Tracking" werden die aus dem RAM-Speicher SP ausgelesenen Daten in einem Zwischenspeicher (Register) ZSP zwischengespeichert und einen Lesezyklus später zum Lesen durch den "Early-Finger" beim "Early-Late-Tracking" an diesen weitergereicht.

Zum besseren Verständniss des Speicherzugriffs gemäß FIGUR 10 wird dieser für das folgende Zugriffsszenario, das sich auf einen "Finger" bezieht, beschrieben. Als Oversampling-Rate wird im Beispiel der Wert "2" gewählt, d.h. pro Chip werden 2 Samples in den Speicher SP abgelegt.

Das Empfangssignal wird mit einer Abtastrate von T_{c}/2, wobei T_{c} die Zeitdauer eines Chips ist, in den RAM-Speicher SP gespeichert.

Anhand des Pfad-Delays wird die Leseadresse berechnet. Für die Entspreizung des Signals werden nur Daten im T_{c}-Raster benötigt.

Beispiel: Delay = 7* T_{c} das heißt das Signal ist um 7 Chips verzögert, der erste korrekte Wert ist der an der 7.ten Chip-Position.

Da pro Chip 2 Samples gespeichert werden, ergibt sich, daß das erste Sample an der Adresse "14 (14/2 = 7)" gelesen werden muß.

Ab der Adresse "14" wird das empfangene Signal gelesen. Der Adresszähler zählt dann in "2"-Schritten weiter. Es werden also Adressen "14, 16, 18, 20, 22, 24 etc." ausgelesen. Dies gilt für den "Main-Finger".

Die "Early- und Late-Finger" benötigen das um einen halben Chip verzögerte Signal bzw. das um einen halben Chip früher eingetroffene Signal.
Das heißt, daß für den "Early-Finger" die Adressen "13, 15, 17, 19, 21 etc." gelesen werden, während für den "Late-Finger" werden die Adressen "15, 17, 19, 21, 23 etc." gelesen werden.

Dies ist in sofern einfach möglich, da die Werte im Raster T_{c}/2 in den RAM-Speicher SP gespeichert werden, somit läßt sich die "Early-Adresse" durch die "Main-Adresse" minus 1 und die "Late-Adresse" durch die "Main-Adresse" plus 1 berechnen.

Im ersten Schritt müßten also die Adressen "13, 14 und 15" aus dem Speicher SP gelesen werden. Im zweiten Schritt werden die Adressen "15, 16 und 17" gelesen u.s.w.

Wenn man es so macht wie in der Schaltung gemäß FIGUR 9, dann braucht man pro Berechnungsschritt 3 Speicherzugriffe. Bei einem 4 Mhz Signal also eine Zugriffsgeschwindigkeit von 12 Mhz. Wird nun der Speicher von 8 "Fingern" gleichzeitig gelesen, also 8 "Early-Finger", 8 "Late-Finger" und 8 "Main-Finger" so wird ein Zugriff von 12 * 8 Mhz = 96 Mhz benötigt.

Bei dieser Konfiguration ist es aber nun so, daß im zweiten Schritt die Speicherstelle "15" gelesen wird, welche ja schon im ersten Schritt benutzt wurde. Somit reichen für den "Early- und Late-Finger" ein Speicherzugriff pro Verarbeitungsschritt. Der Wert für den "Early-Finger" entsteht durch eine Verzögerung von einem Chip aus dem Wert von dem "Late-Finger". Das heißt also, wenn der "Late-Finger" den Wert "17" einliest wird am Ausgang des Verzögerungsgliedes der "Early-Finger" erst mit dem Wert "15" gespeist. Damit ist aber die korrekte Folge der verschiedenen "Finger" gegeben.

Die Anzahl der Speicherzugriffe kann somit um 1/3 reduziert werden, da sich der "Early- und der Late-Finger" einen Speicherzugriff teilen. Dadurch können langsamere und damit günstigere Speicherbausteine verwendet werden, was wiederum eine reduzierte Stromaufnahme zur Folge hat.

## Patentansprüche

1. Verfahren zum Steuern von Speicherzugriffen bei "RAKE"-Empfängern mit "Early-Late Tracking" in Telekommunikationssystemen mit drahtloser Telekommunikation zwischen mobilen und/oder stationären Sende-/Empfangsgeräten, insbesondere in Mobilfunksystemen der dritten Generation, mit folgenden Merkmal:
In dem "RAKE"-Empfänger empfangene Daten, welche beim "Early-Late-Tracking" von einem "Late-Finger" gelesen werden, werden zwischengespeichert und einen Lesezyklus später zum Lesen durch einen "Early-Finger" beim "Early-Late-Tracking" an diesen weitergereicht.

## Claims

1. Method for controlling memory accesses for "RAKE" receivers with "early-late tracking" in telecommunications systems with wire-free telecommunication between mobile and/or stationary transmitters/receivers, in particular in third-generation mobile radio systems, having the following feature:
Data which is received in the "RAKE" receiver and which is read by a "late finger" during "early-late tracking" is temporarily stored and is passed on one read cycle later to an "early finger" of the "early-late tracking" for reading by it.

## Revendications

1. Procédé pour la commande d'accès en mémoire dans des récepteurs en râteau dits "RAKE" avec "suivi avance-retard" ou "Early-Late Tracking" dans des systèmes de télécommunication avec télécommunication sans fil entre appareils émetteurs / récepteurs mobiles et/ou stationnaires, notamment dans des systèmes de radiocommunication mobile de la troisième génération, comportant la caractéristique suivante :
des données reçues dans le récepteur "RAKE" et lues lors du "Early-Late Tracking" par un "doigt en retard" sont mémorisées temporairement et sont retransmises un cycle de lecture plus tard pour la lecture par un "doigt en avance" lors du "Early-Late Tracking" à celui-ci.
